# EUROPEAN PATENT APPLICATION

(11) **EP 4 804 693 A1**
(43) Date of publication of application: **09.09.2026**
(21) Application number: 24886237.7
(22) Date of filing: 30.10.2024
(51) Int. Cl.: H04W 72/232, H04W 72/231, H04W 72/1273, H04W 72/1268, H04L 5/00

(54) **METHOD PERFORMED BY TERMINAL OR BASE STATION IN WIRELESS COMMUNICATION SYSTEM, AND DEVICE THEREFOR**

(30) Priority: 01.11.2023 US 202363546761 P
(71) Applicant: LG Electronics Inc., Yeongdeungpo-gu Seoul 07336 (KR)
(72) Inventor: YANG, Suckchel, Seoul 06772 (KR); CHOI, Seunghwan, Seoul 06772 (KR); KIM, Seonwook, Seoul 06772 (KR)
(74) Representative: Plasseraud IP
(86) International application number: PCT/KR2024/016765
(87) International publication number: WO 2025/095564

(57) **Abstract**

A method performed by a terminal according to an embodiment of the present disclosure may comprise: receiving, through higher layer signaling, configuration information for a table configured such that each row has a plurality of fields for a plurality of cells; receiving downlink control information (DCI) for multi-cell scheduling; and determining bandwidth parts (BWPs) of cells scheduled together through the DCI on the basis of BWP indication information of the DCI, wherein BWP-specific parameters configured in the plurality of fields included in each row of the table are interpreted on the basis of the determined BWPs, and the size of each of the plurality of fields is determined on the basis of a BWP requiring the largest number of bits to indicate a BWP-specific parameter among BWPs configured in each cell.

## Description

### TECHNICAL FIELD

The present disclosure relates to a wireless communication system, and more particularly, to a method and apparatus for transmitting or receiving a downlink/uplink radio signal in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In Release 18 New Radio (NR), the introduction of multi-cell scheduling (MC) downlink control information (DCI) for scheduling multiple cells with a single DCI is under discussion.

### DISCLOSURE

### Technical Problem

An object of the present disclosure is to provide a method of efficiently performing wireless signal transmission/reception procedures and an apparatus therefor. For example, a method for more efficiently performing higher-layer signaling related to multi-cell scheduling DCI and an apparatus therefor may be provided.

The technical problem to be solved is not limited thereto, and other technical problems not mentioned herein can be derived from the following description.

### Technical Solution

In an aspect of the present disclosure, a method performed by a user equipment (UE) is provided. The method includes: receiving, through higher-layer signaling, configuration information for a table configured such that each row has a plurality of fields for a plurality of cells; receiving downlink control information (DCI) for multi-cell scheduling; and determining bandwidth parts (BWPs) of cells co-scheduled through the DCI based on BWP indication information of the DCI. BWP-specific parameters configured in the plurality of fields included in each row of the table may be interpreted based on the determined BWPs, and a size of each of the plurality of fields may be determined based on a BWP requiring a largest number of bits to indicate a BWP-specific parameter among BWPs configured for each cell.

A size of a first field for a first cell among the plurality of fields may be determined based on a BWP requiring a largest number of bits to indicate the BWP-specific parameter among BWPs configured for the first cell. A size of a second field for a second cell among the plurality of fields may be determined based on a second BWP requiring a largest number of bits to indicate the BWP-specific parameter among BWPs configured for the second cell.

Based on L bits being required in a first BWP of a first cell, M bits being required in a second BWP of the first cell, and N bits being required in a third BWP of the first cell to indicate the BWP-specific parameter, a size of a first field for the first cell among the plurality of fields may be determined as a largest number of bits among the L bits, the M bits, and the N bits.

Based on Y bits being required to indicate the BWP-specific parameter for BWP #A determined based on the BWP indication information for the first cell among the plurality of cells, and based on the size of the first field for the first cell among the plurality of fields being determined as X bits greater than the Y bits, the UE may obtain a first BWP-specific parameter for BWP #A of the first cell by selecting the Y bits from among the X bits of the first field. The Y bits selected from among the X bits of the first field may be Y LSBs.

The DCI may include information for indicating one row in the table.

The DCI may schedule PDSCHs or PUSCHs on the co-scheduled cells. The DCI may include minimum scheduling offset indication information related to a minimum scheduling offset from the DCI to the PDSCHs or the PUSCHs. Whether a minimum scheduling offset is configured or the value of the minimum scheduling offset may be identical for the co-scheduled cells. The minimum scheduling offset may be min K0 or min K2.where min K0 may be related to a DCI-to-PDSCH offset, and min K2 may be related to a DCI-to-PUSCH offset. The value of the minimum scheduling offset may be for the multi-cell scheduling, and the value of the minimum scheduling offset for the multi-cell scheduling may be separately configured from minimum scheduling offset values for single-cell scheduling.

In another aspect of the present disclosure, provided is a non-transitory computer-readable recording medium having recorded thereon instructions that, when executed by a processor of a UE, cause the UE to perform the method of claim 1.

In another aspect of the present disclosure, a device is provided. The device includes: a memory storing instructions; and a processor configured to perform operations by executing the instructions. The operations of the processor include: receiving, through higher-layer signaling, configuration information for a table configured such that each row has a plurality of fields for a plurality of cells; receiving DCI for multi-cell scheduling; and determining BWPs of cells co-scheduled through the DCI based on BWP indication information of the DCI. BWP-specific parameters configured in the plurality of fields included in each row of the table may be interpreted based on the determined BWPs, and a size of each of the plurality of fields may be determined based on a BWP requiring a largest number of bits to indicate a BWP-specific parameter among BWPs configured for each cell.

The device may further include a transceiver, and the device may be a UE for wireless communication.

The device may be a processing device configured to control a UE for wireless communication.

In another aspect of the present disclosure, a method performed by a base station (BS) is provided. The method includes: transmitting, through higher-layer signaling, configuration information for a table configured such that each row has a plurality of fields for a plurality of cells; and transmitting DCI for multi-cell scheduling. BWPs of cells co-scheduled through the DCI may be indicated based on BWP indication information of the DCI. BWP-specific parameters configured in the plurality of fields included in each row of the table may be interpreted based on the indicated BWPs. A size of each of the plurality of fields may be determined based on a BWP requiring a largest number of bits to indicate a BWP-specific parameter among BWPs configured for each cell.

In a further aspect of the present disclosure, a BS is provided. The BS includes: a memory storing instructions; and a processor configured to perform operations by executing the instructions. The operations of the processor include: transmitting, through higher-layer signaling, configuration information for a table configured such that each row has a plurality of fields for a plurality of cells; and transmitting DCI for multi-cell scheduling. BWPs of cells co-scheduled through the DCI may be indicated based on BWP indication information of the DCI. BWP-specific parameters configured in the plurality of fields included in each row of the table may be interpreted based on the indicated BWPs. A size of each of the plurality of fields may be determined based on a BWP requiring a largest number of bits to indicate a BWP-specific parameter among BWPs configured for each cell.

### Advantageous Effects

According to the present disclosure, wireless signal transmission and reception may be efficiently performed in a wireless communication system. According to an embodiment, when a table for multiple cells is configured in higher-layer signaling related to multi-cell scheduling DCI, the size of a per-cell information field of the table may be set based on a maximum number of bits for BWPs of a corresponding cell, thereby minimizing a scheduling constraint on BWP-specific information of each cell provided through the multi-cell scheduling DCI.

The effects obtainable from the present disclosure are not limited to those described above, and other effects not mentioned herein may be inferred from the following description.

### BRIEF DESCRIPTION OF THE DRAWINGS

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates exemplary mapping of physical channels in a slot.
FIG. 5 illustrates an exemplary PDCCH/PDSCH reception and acknowledgment/negative acknowledgment (ACK/NACK) transmission process.
FIG. 6 illustrates an exemplary physical uplink shared channel (PUSCH) transmission process.
FIG. 7 illustrates an example of carrier aggregation.
FIG. 8 illustrates an exemplary wireless communication system supporting an unlicensed band.
FIG. 9 illustrates a method of occupying a resource within an unlicensed band.
FIGS. 10 to 12 are diagrams for explaining field structures and field interpretation in multi-cell scheduling downlink control information (DCI) according to respective embodiments of the disclosure.
FIG. 13 is a diagram for explaining a table configuration for multi-cell scheduling DCI according to an embodiment of the disclosure.
FIG. 14 is a diagram for explaining signal transmission and reception between a network and a user equipment (UE) according to an embodiment of the disclosure.
FIG. 15 illustrates a flow of a method performed by a UE according to an embodiment of the disclosure.
FIG. 16 illustrates a flow of a method performed by a base station (BS) according to an embodiment of the disclosure.
FIGS. 17 to 20 illustrate a communication system 1 and wireless devices applicable to the present disclosure.

### DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration," and both may be used interchangeably. Further, a conditional expression (e.g., "if", "in a case", or "when") may be replaced by "based on that" or "in a state/status." In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent disclosure or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

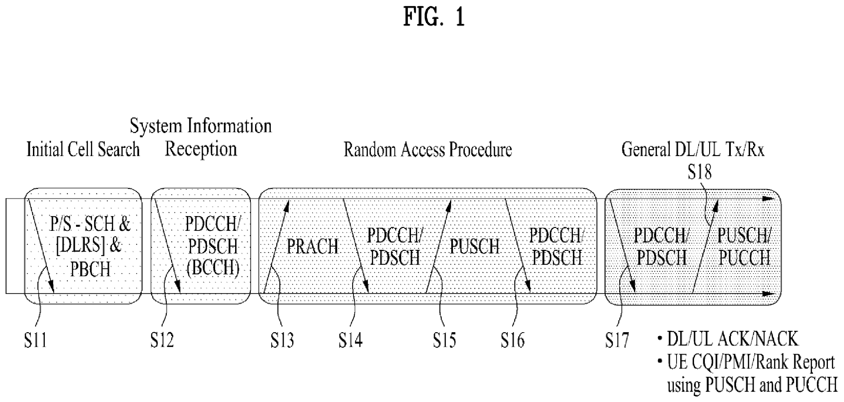

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

The purpose of the random access procedure (RACH procedure) is not limited to initial network access (e.g., S103 to S106). That is, the random access procedure may be used for various purposes. For example, the random access procedure may be used for at least one of an RRC connection re-establishment procedure, handover, UE-triggered UL data transmission, transition from RRC_INACTIVE, SCell time alignment, system information request, beam failure recovery, or UL resource request. However, the random access procedure is not limited thereto. The UE may acquire UL synchronization and/or UL transmission resources from the random access procedure.

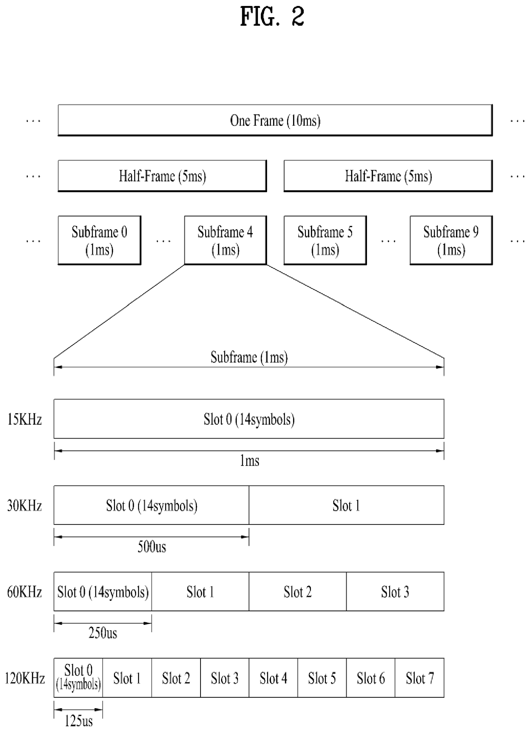

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

**[Table 1]**

| SCS (15*2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N ^{slot}_{symb}: Number of symbols in a slot * N ^{frame,u}ₛₗₒₜ: Number of slots in a frame * N ^{subframe,u}ₛₗₒₜ: Number of slots in a subframe | | | |

Table 2 illustrates that the number of symbols per slot, the number of slots per frame, and the number of slots per subframe vary according to the SCS when the extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

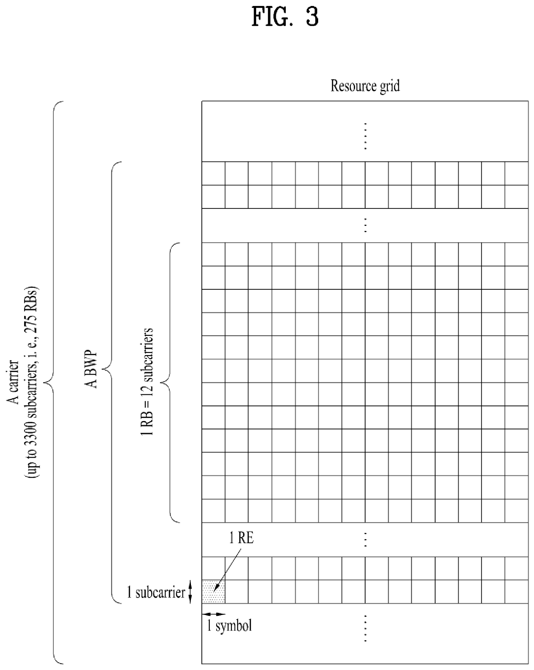

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

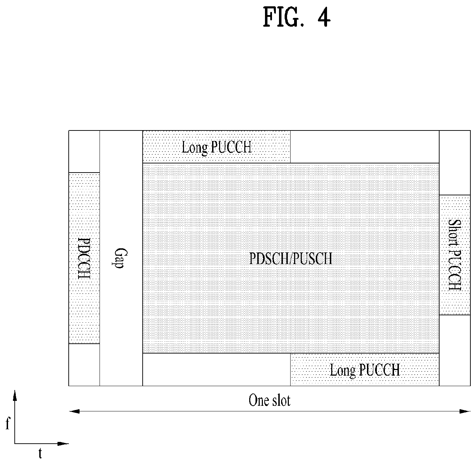

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured by higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters
- controlResourceSetId: A CORESET related to an SS
- monitoringSlotPeriodicityAndOffset: A PDCCH monitoring periodicity (in slots) and a PDCCH monitoring offset (in slots)
- monitoringSymbolsWithinSlot: PDCCH monitoring symbols in a slot (e.g., the first symbol(s) of a CORESET)
- nrofCandidates: The number of PDCCH candidates (one of 0, 1, 2, 3, 4, 5, 6, and 8) for each AL={1, 2, 4, 8, 16}
   * An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

**[Table 3]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

**[Table 4]**

| DCI format | Usage |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 0_2 | Scheduling of PUSCH in one cell |
| 1_0 | Scheduling of PDSCH in one cell |
| 1_1 | Scheduling of PDSCH in one cell, and/or triggering one shot HARQ-ACK codebook feedback |
| 1_2 | Scheduling of PDSCH in one cell |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.
- SR (Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

**[Table 5]**

| PUCCH format | Length in OFDM symbols N^{PUCCH}_{symb} | Number of bits | Usage | Etc |
|---|---|---|---|---|
| 0 | 1 - 2 | ≤2 | HARQ, SR | Sequence selection |
| 1 | 4 - 14 | ≤2 | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM(no UE multiplexing) |
| 4 | 4 - 14 | >2 | HARQ, CSI, [SR] | DFT-s-OFDM(Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

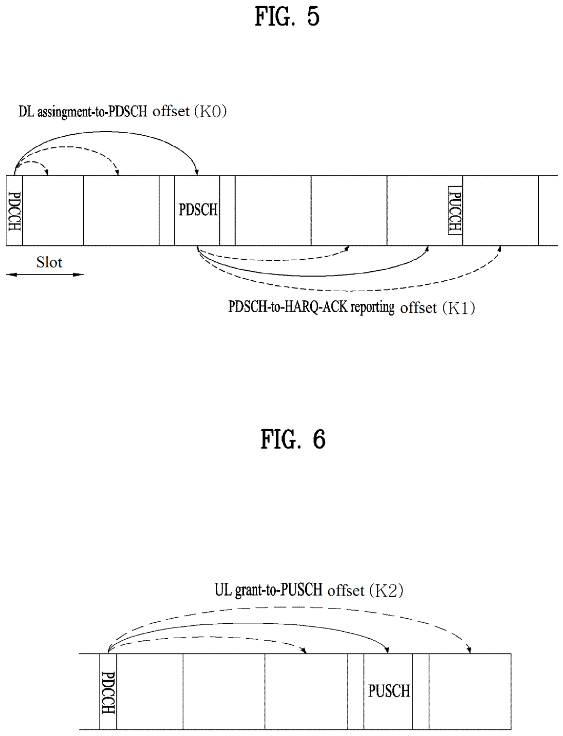

FIG. 5 illustrates an exemplary PDCCH/PDSCH reception and ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.
- Frequency domain resource assignment: Indicates an RB set assigned to a PDSCH
- Time domain resource assignment: Indicates K0 and the starting position (e.g., OFDM symbol index) and length (e.g., the number of OFDM symbols) of the PDSCH in a slot.
- PDSCH-to-HARQ_feedback timing indicator: Indicates K1.
- HARQ process number (4 bits): Indicates the HARQ process ID of data (e.g., a PDSCH or TB).

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

On the other hand, an HARQ-ACK codebook is largely defined into three codebook types: Type-1, Type-2, and Type-3 according to an HARQ-ACK bit (payload) configuration method. In the case of the Type-1 codebook, an HARQ-ACK payload is configured according to a combination of a candidate HARQ-ACK timing (K1) set (configured for a corresponding cell) and a candidate PDSCH occasion (SLIV) set (e.g., a codebook of a semi-static fixed size based on RRC signaling). In the case of the Type-2 codebook, a codebook size may be changed dynamically depending on the number of PDSCHs actually scheduled or the number of corresponding resource allocations (e.g., downlink assignment index, DAI). In the case of the Type-3 codebook, an HARQ-ACK payload is configured by mapping an HARQ-ACK bit related to a corresponding HPN for each HARQ Process Number (HPN) according to a maximum HARQ process(es) number (configured for a corresponding cell per cell) (e.g., one-shot A/N reporting). Recently, an enhanced Type-3 codebook is added to the recent NR standard as a form of the Type-3 codebook. The enhanced Type-3 codebook is not a method of reporting an HARQ-ACK bit for all cells/HPNs at a time to reduce signaling overhead, but a method of reporting an HARQ-ACK bit for all cells/HPNs indicated to a Base Station (BS) among all cells/HPNs. Subsets of cells/HPNs associated with the enhanced Type-3 codebook are configured for a user equipment (UE) through higher layer signaling, and then one of the subsets configured for the UE may be indicated through DCI that triggers the enhanced Type-3 codebook. The UE may report an HARQ-ACK for the cells/HPNs belonging to the indicated subset.

In the case of the Type-1 codebook, a combination of all SLIVs that can be transmitted (or scheduled to be transmitted) within a DL slot before K1 slots from an A/N transmission slot for each K1 value is calculated in a state that a set of a plurality (e.g., N) of candidate K1 values (for a corresponding cell per cell), an A/N sub-payload (including a determination of an A/N bit position/order corresponding to each SLIV that can be transmitted within the corresponding slot) is configured (which is defined as "SLIV Pruning"), and an entire A/N codebook is then configured by concatenating such an A/N sub-payload to N K1 values. In this case, the set of (N) DL slots corresponding to each K1 value may be defined as a bundling window corresponding to the A/N transmission slot.

In the case of the Type-2 HARQ-ACK codebook, a codebook for transmitting HARQ-ACK information on the same PUCCH/PUSCH is defined based on a Counter-Downlink Assignment Indicator (C-DAI) indicated by an actually transmitted PDCCH and a Total-DAI (T-DAI) value. That is, the codebook is configured based on PDCCH information actually transmitted to a UE. When the UE fails in detection of a specific PDCCH, the UE transmits an NACK on a bit for the corresponding PDCCH among bits defined in the codebook. In this case, whether the PDCCH detection fails may be recognized by the UE through the C-DAI and the T-DAI value. The C-DAI is obtained by counting the accumulated number of {serving cell index, PDCCH monitoring occasion}-pairs provided by PDSCH receptions up to a current serving cell and a current PDCCH monitoring occasion. First, for a plurality of PDSCH receptions for the same {serving cell index, PDCCH monitoring occasion}-pair, a PDSCH with which a reception starts first is counted first (i.e., a lower C-DAI value is assigned). Next, when there are a plurality of pairs having the same PDCCH monitoring occasion index among different {serving cell index, PDCCH monitoring occasion}-pairs, a pair having a lower serving cell index is counted first. Next, when there are a plurality of pairs having the same serving cell index among different {serving cell index, PDCCH monitoring occasion}-pairs, a PDCCH monitoring occasion of a lower index is counted first.

In the case of the Type-3 codebook, specifically, one of Mode 1 for feeding back an HARQ-ACK and an NDI corresponding to the HARQ-ACK together and Mode 2 for feeding back only the HARQ-ACK without the NDI may be configured for the UE from the BS. When the UE is configured with Mode 1, it operates to feed back, per HARQ Process Number (HPN), an HARQ-ACK for a PDSCH reception of the corresponding HPN and an NDI (indicated through a DCI) together.

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information
- Frequency domain resource assignment: Indicates an RB set assigned to the PUSCH
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

### Carrier aggregation

NR may support a wider uplink/downlink bandwidth by aggregating a plurality of uplink/downlink carriers (i.e., carrier aggregation). It is possible to transmit/receive signals in a plurality of carriers through carrier aggregation. When carrier aggregation is applied, each carrier (see FIG. A2) may be referred to as a Component Carrier (CC). CCs may be contiguous or non-contiguous to each other in the frequency domain. A bandwidth of each CC may be determined independently. Asymmetric carrier aggregation in which the number of UL CCs is different from the number of DL CCs is also possible.
- PCell (Primary Cell): In the case of a UE configured with carrier aggregation, a cell operating at a primary frequency (e.g., Primary Component Carrier (PCC)) at which the UE performs an initial connection establishment procedure or initiates a connection re-establishment procedure. In the case of Dual Connectivity (DC), a Master Cell Group (MCG) cell operating at a primary frequency at which the UE performs an initial connection establishment procedure or initiates a connection re-establishment procedure.
- Secondary Cell (SCell): In the case of a UE configured with carrier aggregation, a cell that provides a radio resource additionally other than a special cell.
- Primary SCG Cell (PSCell): In the case of DC, a Secondary Cell Group (SCG) cell in which a UE performs a random access when performing an RRC reconfiguration and synchronization process.
- Special Cell (SpCell): In the case of DC, a special cell represents a PCell of MCG or a PSCell of SCG. Otherwise (i.e., non-DC), a special cell represents a PCell.
- Serving Cell (ServCell): Indicates a cell configured for a UE in an RRC_CONNECTED state. If CA/DA is not configured, only one serving cell (i.e., PCell) exists. If CA/DA is configured, a serving cell represents a cell set including special cell(s) and all SCells.

Meanwhile, control information may be configured to be transmitted and received only through a specific cell. For example, UCI may be transmitted through a special cell (e.g., PCell). When an SCell (hereinafter, PUCCH-SCell) for which a PUCCH transmission is allowed is configured, UCI may also be transmitted through the PUCCH-SCell. For another example, a BS may allocate a scheduling cell (set) to reduce PDCCH Blind Decoding (BD) complexity at a UE side. For PDSCH reception/PUSCH transmission, a UE may perform PDCCH detection/decoding only in a scheduling cell. In addition, the BS may transmit a PDCCH only through the scheduling cell (set). For example, a PDCCH for downlink allocation may be transmitted in cell #0 (i.e., a scheduling cell), and a corresponding PDSCH may be transmitted in cell #2 (i.e., a scheduled cell) (Cross-Carrier Scheduling (CCS)). The scheduling cell (set) may be configured in a UE-specific, UE-group-specific, or cell-specific manner. The scheduling cell includes a special cell (e.g., PCell).

For the cross-carrier scheduling, a Carrier Indicator Field (CIF) is used. The CIF may be semi-statically disabled/enabled by UE-specific (or UE group-specific) higher layer (e.g., Radio Resource Control (RRC)) signaling. A CIF field is an x-bit field (e.g., x=3) in a PDCCH (i.e., DCI) and may be used to indicate a (serving) cell index of a scheduled cell.
- CIF disabled: A CIF is absent in a PDCCH. The PDCCH on a scheduling cell allocates a PDSCH/PUSCH resource on the same cell. That is, the scheduling cell is the same as a scheduled cell.
- CIF enabled: A CIF exists in a PDCCH. The PDCCH on scheduling may allocate a PDSCH/PUSCH resource on one of a plurality of cells using the CIF. A scheduling cell may be the same as or different from a scheduled cell. A PDSCH/PUSCH means a PDSCH or PUSCH.

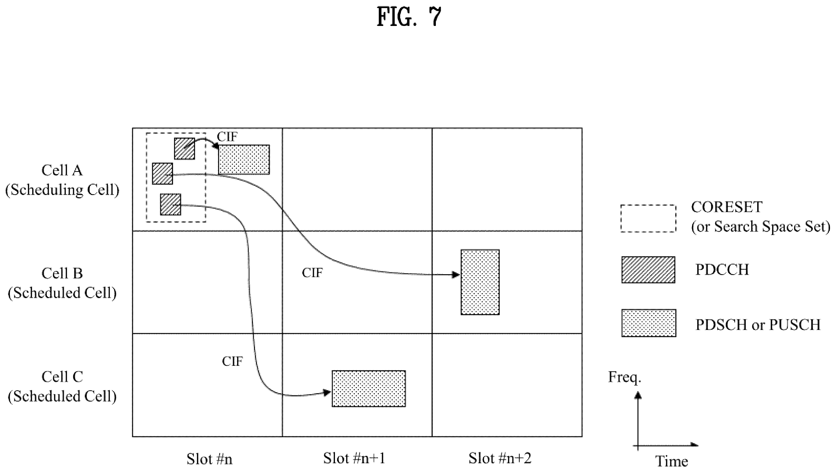

FIG. 7 is a diagram illustrating carrier aggregation. In FIG. 7, it is assumed that three cells are aggregated. If a CIF is disabled, only a PDCCH for scheduling its PDSCH/PUSCH may be transmitted in each cell (Self-Carrier Scheduling (SCS)). On the other hand, if a CIF is enabled by UE-specific (or UE-group-specific or cell-specific) higher layer signaling and cell A is configured as a scheduling cell, not only a PDCCH for scheduling a PDSCH/PUSCH of the cell A but also a PDCCH for scheduling a PDSCH/PUSCH of another cell (i.e., scheduled cell) may be transmitted in the cell A(Cross-Carrier Scheduling (CCS)). In this case, a PDCCH for scheduling a cell of its own is not transmitted in cell B/C.

NR-shared spectrum/unlicensed band (NR-U) operation

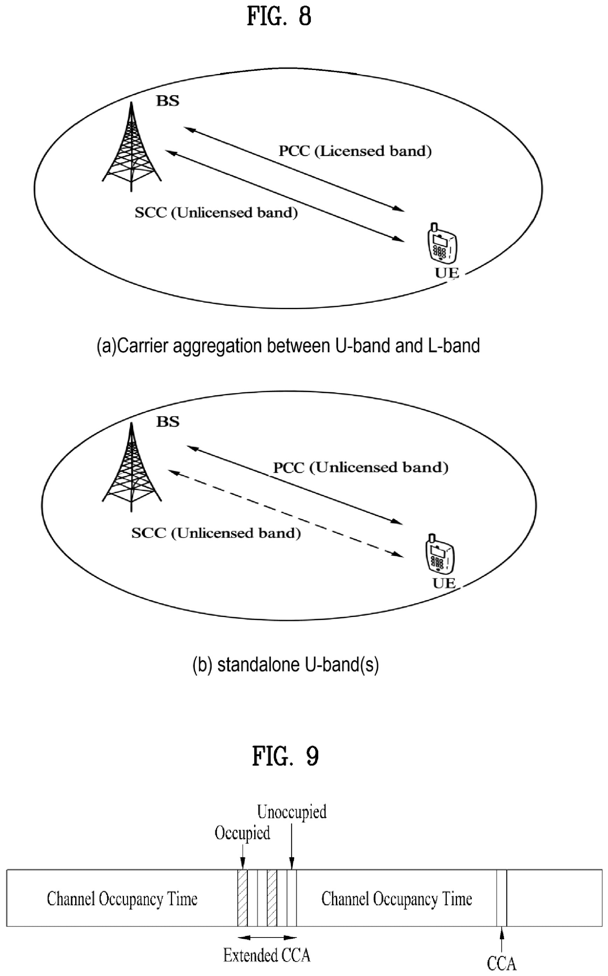

FIG. 8 illustrates a wireless communication system supporting an unlicensed band. For convenience, a cell operating in a licensed band (hereinafter, L-band) is defined as an LCell and a carrier of the LCell is defined as a (DL/UL) LCC. A cell operating in an unlicensed band (hereinafter, U-band) is defined as a UCell and a carrier of the UCell is defined as a (DL/UL) UCC. A carrier of a cell may represent an operating frequency (e.g., a center frequency) of the cell. A cell/carrier (e.g., CC) may generically be referred to as a cell.

When carrier aggregation is supported, one UE may transmit and receive signals to and from a BS in a plurality of aggregated cells/carriers. If a plurality of CCs is configured for one UE, one CC may be configured as a primary CC (PCC) and the other CCs may be configured as secondary CCs (SCCs). Specific control information/channels (e.g., a CSS PDCCH and PUCCH) may be configured to transmit and receive signals only in the PCC. Data may be transmitted and received in the PCC and/ or the SCCs. In FIG. 8(a), the UE and the BS transmit and receive signals in the LCC and the UCC (non-standalone (NSA) mode). In this case, the LCC may be configured as the PCC and the UCC may be configured as the SCC. If a plurality of LCCs is configured for the UE, one specific LCC may be configured as the PCC and the other LCCs may be configured as the SCCs. FIG. 8(a) corresponds to LAA of the 3GPP LTE system. FIG. 8(b) illustrates the case in which the UE and the BS transmit and receive signals in one or more UCCs without the LCC (SA mode). In this case, one of the UCCs may be configured as the PCC and the other UCCs may be configured as the SCCs. To this end, PUCCH, PUSCH, PRACH transmission can be supported. Both the NSA mode and the SA mode may be supported in an unlicensed band of the 3GPP NR system.

Unless otherwise mentioned, the definitions below are applicable to terms as used in the present disclosure
- Channel: A carrier or a part of a carrier including consecutive RBs in which a channel access procedure (CAP) is performed in a shared spectrum
- Channel access procedure (CAP): A procedure of evaluating the availability of a channel based on sensing to determine whether the channel is used by other communication node(s) before a signal transmission. A basic unit for sensing is a sensing slot with a duration Tsl of 9us. The sensing slot duration Tsl may be considered to be idle when a BS or a UE senses the channel during the sensing slot duration, and power detected for at least 4us within the sensing slot duration is less than an energy detection threshold XThresh. Otherwise, the sensing slot duration Tsl of 9us may be considered to be busy. A CAP may be referred to as listen-before-talk (LBT).
- Channel occupancy: Transmission(s) on channel(s) from a BS/UE after a CAP.
- Channel occupancy time (COT): A total time for which the BS/UE and any BS/UE(s) sharing the channel occupancy perform transmission(s) on the channel after the BS/UE corresponding CAPs. When a COT is determined, if a transmission gap is less than or equal to 25us, the gap duration may also be counted in the COT. The COT may be shared for transmission between the BS and corresponding UE(s).
- DL transmission burst: A set of transmissions from the BS without any gaps greater than 16us. Transmissions from the BS separated by a gap of more than 16us are considered as separate DL transmission bursts. The BS may perform transmission(s) after a gap within a DL transmission burst without sensing channel availability.
- UL transmission burst: A set of transmissions from the UE without any gaps greater than 16us. Transmissions from the UE separated by a gap of more than 16us are considered as separate UL transmission bursts. The UE may perform transmission(s) after a gap within a UL transmission burst without sensing channel availability.
- Discovery burst: A DL transmission burst including a set of signal(s) and/or channel(s) confined within a window and associated with a duty cycle. In the LTE-based system, a discovery burst may be transmission(s) initiated by a BS, including a primary synchronization signal (PSS), a secondary synchronization signal (SSS) and a cell-specific reference signal (CRS) and further including a non-zero power CSI-RS. In the NR-based system, a discovery burst may be transmission(s) initiated by a BS, including at least an SS/PBCH block and further including a CORESET for a PDCCH scheduling a PDSCH with SIB1, a PDSCH carrying SIB1, and/or non-zero power CS-RS.

FIG. 9 illustrates a method of occupying resources in an unlicensed band. According to regional regulations concerning the unlicensed band, a communication node in the unlicensed band needs to determine, before signal transmission, whether other communication nodes use a channel. Specifically, the communication node may first perform carrier sensing (CS) before signal transmission to check whether other communication nodes transmit signals. If it is determined that other communication nodes do not transmit signals, this means that clear channel assessment (CCA) is confirmed. When there is a predefined CCA threshold or a CCA threshold configured by higher layer (e.g., RRC) signaling, if energy higher than the CCA threshold is detected in a channel, the communication node may determine that the channel is in a busy state and, otherwise, the communication node may determine that the channel is in an idle state. For reference, in Wi-Fi standard (802.11ac), the CCA threshold is set to -62dBm for a non-Wi-Fi signal and to -82dBm for a Wi-Fi signal. Upon determining that the channel is in an idle state, the communication node may start to transmit signals in the UCell. The above processes may be referred to as listen-before-talk (LBT) or a channel access procedure (CAP). LBT and CAP may be used interchangeably.

Table 6 illustrates exemplary CAPs supported in NR-U.

**[Table 6]**

| | Type | Explanation |
|---|---|---|
| DL | Type 1 CAP | CAP with random back-off |
| | | - time duration spanned by the sensing slots that are sensed to be idle before a downlink transmission(s) is random |
| | Type 2 CAP - Type 2A, 2B, 2C | CAP without random back-off |
| | | - time duration spanned by sensing slots that are sensed to be idle before a downlink transmission(s) is deterministic |
| UL | Type 1 CAP | CAP with random back-off |
| | | - time duration spanned by the sensing slots that are sensed to be idle before a downlink transmission(s) is random |
| | Type 2 CAP - Type 2A, 2B, 2C | CAP without random back-off |
| | | - time duration spanned by sensing slots that are sensed to be idle before a downlink transmission(s) is deterministic |

### Configuration of multi-cell scheduling DCI and higher-layer configuration information therefor

New Radio (NR) supports a wide range of spectrum across various frequency ranges. The use of spectrum for 5G-Advanced is expected to increase through reuse (re-farming) of frequency bands used in previous generations. Particularly, in the case of frequency range 1 (FR1), which is a low-frequency band, available spectrum blocks tend to become more segmented and dispersed. In the case of frequency range 2 (FR2) and some FR1 bands, available spectrum may become wider, and thus operation of multiple carriers/cells within a band may be required. That is, it is necessary to improve throughput and coverage by using such dispersed spectrum bands or wider-bandwidth spectrum in a more power-efficient and flexible manner.

When data is scheduled across multiple cells including intra-band cells and inter-band cells, it is important to improve flexibility and spectrum/power efficiency. However, in a current 5G NR scheduling scheme, DCI may schedule only a PUSCH/PDSCH for one cell. With future spectrum expansion/change, a need for simultaneous scheduling of multiple cells is expected to increase. To reduce control overhead caused by scheduling, it is advantageous to perform scheduling of PUSCHs/PDSCHs of multiple cells through a single DCI.

Accordingly, in a carrier aggregation (CA) situation in which multiple cells are configured, a multi-cell scheduling scheme for simultaneously scheduling a plurality of (serving) cells/component carriers (CCs) (and PDSCH/PUSCH transmissions through the cells/CCs) through a single DCI may be considered in Release 18 to reduce DCI overhead required for PDSCH/PUSCH scheduling.

Accordingly, a method of configuring and interpreting respective fields included in multi-cell DCI is proposed for designing a structure of the multi-cell DCI for performing the above-described multi-cell scheduling. In the present disclosure, although a multi-cell scheduling operation for PDSCH transmission or PUSCH transmission is mainly described, the operating principle of the proposed method may be equally applied to multi-cell scheduling for PUSCH transmission or PDSCH transmission. In addition, in the present disclosure, a cell may mean an (active) bandwidth part (BWP) configured/indicated for the cell.

Hereinafter, multi-cell scheduling DCI may be referred to as multi-cell DCI or simply DCI, and may include at least one of downlink (DL) grant DCI for scheduling a PDSCH and uplink (UL) grant DCI for scheduling a PUSCH.

Hereinafter, a reference cell may be determined based on at least one of i) to viii) below, but the present disclosure is not limited thereto. Within a cell combination simultaneously scheduled through the same multi-cell DCI (i.e., a co-scheduled cell set) (or within each cell subgroup described below), the reference cell may be i) a cell having the lowest cell index (or the highest cell index); ii) a cell for which a starting symbol of indicated PDSCH/PUSCH transmission is earliest (or latest) (if a plurality of cells have the earliest starting symbol of PDSCH/PUSCH transmission (or the latest starting symbol of PDSCH/PUSCH transmission), the cell having the lowest (or highest) cell index among the plurality of cells); iii) a cell for which an ending symbol of indicated PDSCH/PUSCH transmission is earliest (or latest) (if a plurality of cells have the earliest ending symbol of PDSCH/PUSCH transmission (or the latest ending symbol of PDSCH/PUSCH transmission), the cell having the lowest (or highest) cell index among the plurality of cells); iv) a cell indicated by a carrier indicator field (CIF) value or a cell designated in advance through RRC; v) a cell having the lowest (or highest) cell index within an entire set of cells schedulable through any multi-cell DCI (i.e., a schedulable cell set); vi) a cell indicated by a CIF value; vii) a cell through which multi-cell DCI is transmitted; and/or viii) a cell designated in advance through RRC.
- Shared-cell-common method: a method in which only one field is configured in multi-cell DCI, and a value indicated by the corresponding DCI field is commonly applied to all cells (scheduled through the multi-cell DCI).
- Shared-state-extension method: a method in which only one field is configured in multi-cell DCI, and each of a plurality of states indicated by the corresponding DCI field is configured/set as a combination of a plurality of pieces of information for a plurality of cells (rather than information for a single cell).

A field to which the shared-cell-common method and/or the shared-state-extension method proposed in the present disclosure is applied may be configured as follows: i) only one field is configured in multi-cell DCI (i.e., one field commonly applied to all cells belonging to a co-scheduled cell set), ii) one field (commonly applied) is configured for each cell subgroup in a state in which all cells belonging to the co-scheduled cell set are grouped (configured) into one or more (a plurality of) cell subgroups (i.e., individual/independent fields are configured for cell subgroups), iii) one field (commonly applied) is configured for each cell subgroup in a state in which all cells belonging to a schedulable cell set are grouped (configured) into one or more (a plurality of) cell subgroups (i.e., individual/independent fields are configured for cell subgroups) (i.e., the shared-cell-common/shared-state-extension method and a field/information configuration/indication scheme based thereon may be applied for each cell subgroup). In the above, each cell subgroup may be configured/set as one specific cell or a plurality of specific cells belonging to the co-scheduled cell set or the schedulable cell set (for example, some of the cells belonging to the co-scheduled cell set or the schedulable cell set, or all of the corresponding cells).

When a DCI field to which the shared-cell-common method proposed in the present disclosure is applied has a structure in which, in existing single-cell DCI-based scheduling, a table including one or more (a plurality of) states/indices (configured with different parameters/values (combinations) for each cell) is preconfigured through RRC or a medium access control-control element (MAC-CE), and one of the (plurality of) states/indices in the table is indicated through the corresponding DCI field (for example, in the case of a physical resource block (PRB) bundling size indicator and/or a rate matching (RM) indicator and/or a zero-power channel state information-reference signal (ZP CSI-RS) trigger and/or a sounding reference signal (SRS) request), a specific state/index indicated through a DCI field commonly configured for a cell set (e.g., a co-scheduled cell set or a cell subgroup) to which the shared-cell-common method is applied may be applied as follows: Opt X) the specific state/index may be interpreted/applied as a parameter/value (combination) corresponding to the state/index in a table configured for each cell belonging to the cell set (i.e., for each cell); Opt Y) a parameter/value (combination) corresponding to the state/index in a table configured for a specific reference cell in the cell set may be commonly applied to cells belonging to the cell set; or Opt Z) in a state in which a separate common table to be commonly applied to the cell set is preconfigured through RRC/MAC-CE in the same manner as described above, a parameter/value (combination) corresponding to the state/index in the common table may be commonly applied to cells belonging to the cell set.

In addition, for some cells, a value for the corresponding state/codepoint may not be configured. For example, for an i-th state/codepoint, Cell #2 may have value x, while no value may be configured for Cell #1 and Cell #N. For interpretation of a shared-cell-common DCI field, the UE may be configured with information (e.g., a table) including values of cells to be applied for each cell. For example, for the shared-cell-common DCI field, a first table may be configured for Cell #1, a second table may be configured for Cell #2, ..., and an N-th table may be configured for Cell #N.

For example, a table configured for each cell for single-cell (SC) scheduling may also be used for multi-cell (MC) scheduling. For example, in a state in which an SC table referenced by SC DCI of an SC format is configured for each cell, an MC table referenced by MC DCI may correspond to a combination of SC tables of multiple cells.

### [Type 1A field-related: Invalid state handling]

First, a more specific example of the shared-cell-common method described above (particularly, Opt X) is provided as follows (hereinafter, a field configured based thereon is referred to as a "Type 1A" field for convenience).

First, in existing single-cell DCI-based scheduling, for a specific DCI field (e.g., a BWP indicator, an open-loop power control parameter set indication (i.e., an OLPC indicator), ChannelAccess-CPext-CAPC (for a PUSCH) (i.e., PUSCH LBT), a beta offset indicator, and a PDCCH monitoring adaptation indication), when N (different) parameters/values (combinations) corresponding to N states/codepoints/indices indicated by the corresponding DCI field are preconfigured through RRC or MAC-CE, if one of the N states/codepoints/indices is indicated through the corresponding DCI field, the UE may perform PDSCH/PUSCH transmission/reception operation by applying a parameter/value (combination) configured for the indicated state/codepoint/index. In this case, the size of the DCI field may be determined as ceil {log₂(N)} bits, where N may be configured as a different value (or the same value) for each cell.

For reference, in the disclosure, ceil (X) denotes the smallest integer greater than or equal to X, floor (X) denotes the largest integer less than or equal to X, and a value obtained by performing a modulo-B operation on A denotes a remainder obtained when A is divided by B.

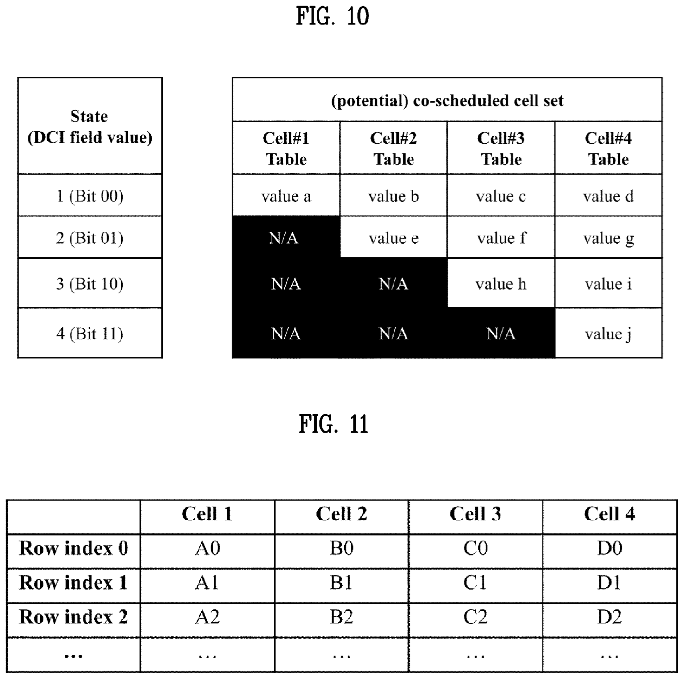

For the specific DCI field in multi-cell DCI-based scheduling, when a parameter/value (combination) for each state/codepoint/index (applied to single-cell DCI-based scheduling) is preconfigured for each cell as described above, if a specific state/codepoint/index is indicated through the corresponding DCI field, the UE may perform PDSCH/PUSCH transmission/reception operation scheduled for each cell by interpreting and applying, for the indicated state/codepoint/index, a parameter/value (combination) configured for each cell on a cell-by-cell basis. For example, FIG. 10 illustrates a DCI field according to Opt X of the shared-cell-common method. In FIG. 10, for convenience of description, it is assumed that four cells are included in a co-scheduled cell set, and thus the actual number of co-scheduled cells may be four or less. A value indicated by one state (codepoint) of the DCI field of FIG. 10 may be independently interpreted/configured for each cell. For example, assuming that a first state/codepoint (e.g., 00) is indicated, the first state/codepoint may mean value a for Cell #1, may mean value b for Cell #2, and may mean value c for Cell #3. The meaning that a value is independently configured for each cell includes a case in which different values are configured for different cells. However, the meaning is not limited to such a case and does not exclude a case in which an identical value is configured for two or more cells. That is, it is sufficient that values for the cells are independently configured, and there may be no constraint that the independently configured values should be identical to or different from one another.

In multi-cell DCI-based scheduling, for the entire schedulable cell set (or each co-scheduled cell set), the size of the specific DCI field may be determined based on N values configured for each cell belonging to the cell set as follows. According to Alt A), the size of the corresponding DCI field may be determined as ceil {log₂(N_max)} bits based on N_max, which is the maximum value (in this case, the corresponding DCI field may have a structure in which up to the (first) N_max states/codepoints/indices are indicated). Alternatively, according to Alt B), the size of the corresponding DCI field may be determined as ceil {log₂(N_min)} bits based on N_min, which is a minimum value (in this case, the corresponding DCI field may have a structure in which only up to the (first) N_min states/codepoints/indices are indicated). For example, referring to FIG. 10, the number of states of Cell #1 is the smallest (i.e., N_min), and the number of states of Cell #4 is the largest (i.e., N_max). According to Alt A), the size of the corresponding DCI field is ceil {log₂(N_max)} = 2 bits based on Cell #4. According to Alt B), the size of the corresponding DCI field is ceil {log₂(N_min)} = 1 bit based on Cell #1.

When Alt A) is applied, some cells may not have a value configured for the corresponding state/codepoint. For example, referring to FIG. 10, for Cell #1 and Cell #2, a value for a third state (DCI field value = 2) may not be configured in the corresponding table. More generally, for Cell X (for example, a cell for which N is set to N_low, which is smaller than N_max), when a specific state/index is indicated through the specific DCI field (for example, a state/index corresponding to a value greater than DCI field value = {N_low - 1}, that is, a state/index after the N_low-th state/index), a parameter/value (combination) configured for the corresponding state/index may not be present for Cell X. In consideration of such a case, the following operations are proposed (for convenience, M = ceil {log₂(N_max)}, K = ceil {log₂(N_low)} (M ≥ K), and L = floor {log₂(N_low)} (M ≥ L)).
1) Alt 1: For Cell X, only (selected) K bits among M bits in the DCI field may be interpreted and applied. The K bits may be, for example, the first K bits (MSBs) or the last K bits (LSBs). For example, referring to FIG. 10, in the case of Cell #1 and Cell #2, only one bit (MSB or LSB) among a total of two bits included in the DCI field may be selected and applied. If a binary value of the selected one bit (MSB or LSB) is 0, value a may be applied to Cell #1, and value b may be applied to Cell #2.
   A. There may be a case in which a state/index corresponding to a field value greater than {N_low - 1} is indicated through the K bits, and in this case, Alt 2, Alt 3, or Alt 6 described below may be applied. For example, referring to FIG. 10, in the case of Cell #1 and Cell #2, only one bit (MSB or LSB) among a total of two bits included in the DCI field may be selected and applied. If a binary value of the selected one bit is 1, value e may be applied to Cell #2, but a value to be applied may not be present in the table of Cell #1. To address such a problem, Alt 3 or Alt 6 may be applied.
   B. Alternatively, for a cell configured to be schedulable through multi-cell DCI, the N value configured for the DCI field based on the shared-cell-common method (particularly, Opt X) may be restricted to a form of 2^{A} (where A is a positive integer).
   C. For example, in the case of the BWP indicator field, when N_max = 4 and N_low configured for Cell X = 2 (e.g., see Cell #2 of FIG. 10), the UE may operate for Cell X by interpreting only an MSB 1-bit or an LSB 1-bit in the BWP indicator field (in the multi-cell DCI) and regarding a BWP index configured for a state corresponding thereto as being indicated.
   D. As another example, in the case of the OLPC indicator field, when N_max = 4 and N_low configured for Cell X = 2 (e.g., see Cell #2 of FIG. 10), the UE may operate for Cell X by interpreting only an MSB 1-bit or an LSB 1-bit in the OLPC indicator field (in the multi-cell DCI) and regarding a power control parameter set index configured for a state corresponding thereto as being indicated.
   E. As another example, in the case of the PUSCH LBT field, when N_max = 8 and N_low configured for Cell X = 4, the UE may operate for Cell X by interpreting only an MSB 2-bit or an LSB 2-bit in the PUSCH LBT field (in the multi-cell DCI) and regarding an LBT-related parameter/value (combination) configured for a state corresponding thereto as being indicated.
2) Alt 2: When a state/index corresponding to a field value greater than {N_low - 1} is indicated through the DCI field, a specific parameter/value (combination) separately configured/defined in advance may be applied to Cell X. For example, referring to FIG. 10, when a value greater than binary value 00 is indicated through the DCI field, Alt 2 may be applied to Cell #1. When a value greater than binary value 01 is indicated through the DCI field, Alt 2 may also be applied to Cell #2 (in addition to Cell #1). When a value greater than binary value 10 is indicated through the DCI field, Alt 2 may also be applied to Cell #3 (in addition to Cell #1 and Cell #2).
   A. The specific parameter/value (combination) may be configured/defined as a parameter/value (combination) associated with a specific one (e.g., the lowest or highest) among N_low states/indices preconfigured for Cell X.
   B. For example, in the case of the BWP indicator field, when N_low configured for Cell X = 2 and a state indicated by the BWP indicator field (in the multi-cell DCI) has a value greater than 1 (i.e., bit 01) (i.e., when the corresponding state is bit 10 or 11 (rather than bit 00 or 01)), the UE may regard a BWP index configured for the lowest state 0 (or a separately configured specific state) as being indicated for Cell X and operate accordingly.
   C. As another example, in the case of the OPLC indicator field, when N_low configured for Cell X = 2 and a state indicated by the OPLC indicator field (in the multi-cell DCI) has a value greater than 1 (i.e., bit 01), the UE may regard a power control parameter set index configured for the lowest state 0 (or a separately configured specific state) as being indicated for Cell X and operate accordingly.
   D. As another example, in the case of the PUSCH LBT field, when N_low configured for Cell X = 4 and a state indicated by the OPLC indicator field (in the multi-cell DCI) has a value greater than 3 (i.e., bit 011), the UE may regard an LBT-related parameter/value (combination) configured for the lowest state 0 (or a separately configured specific state) as being indicated for Cell X and operate accordingly.
3) Alt 3: When a state/index corresponding to a field value greater than {N_low - 1} is indicated through the DCI field, the UE may regard that no PDSCH/PUSCH scheduling is present for Cell X.
   - For example, referring to FIG. 10 on the assumption that Alt 3 is applied alone (without application of Alt 1), when a value greater than binary value 00 is indicated through the DCI field, Alt 3 may be applied to Cell #1, and when a value greater than binary value 01 is indicated through the DCI field, Alt 3 may also be applied to Cell #2 (in addition to Cell #1).
   - Assuming that Alt 3 is applied in addition to Alt 1 as described above, according to Alt 1, in the case of Cell #1, only one bit (MSB or LSB) among a total of two bits included in the DCI field may be selected and applied. If a binary value of the selected one bit is 1, Alt 3 may be applied to Cell #1 because no value to be applied is present in the table of Cell #1.
   - When Alt 3 is applied (regardless of whether Alt 1 is applied), if a value greater than binary value 10 is indicated through the DCI field, Alt 3 may be applied to Cell #3.

   A. According to application of Alt 3, the UE may omit PDSCH/PUSCH transmission/reception operation on Cell X (and, in the case of a PDSCH, the UE may feed back corresponding HARQ-ACK as a NACK).
   B. For example, in the case of the BWP indicator field (or the OLPC indicator field), when N_low configured for Cell X = 2 and a state indicated by the BWP indicator field (or the OLPC indicator field) (in the multi-cell DCI) has a value greater than 1 (i.e., bit 01), the UE may operate by assuming that no PDSCH/PUSCH scheduling is present for Cell X.
4) Alt 4: For Cell X, the UE may additionally configure and apply {N_max - N_low} = N_gap parameters/values (combinations) corresponding to respective states/indices from state/index N_low to state/index N_max - 1. For example, referring to FIG. 10, for Cell #1, values mapped to binary values 01, 10, and 11 may be additionally configured. For Cell #2, values mapped to binary values 10 and 11 may be additionally configured. For Cell #3, a value mapped to binary value 11 may be additionally configured.
   A. The additional parameters/values (combinations) may be configured as parameters/values (combinations) associated with specific N_gap states/indices among N_low states/indices preconfigured for Cell X.
   B. For example, in the case of the BWP indicator field, when N_max = 4 and N_low configured for Cell X = 2, BWP indices corresponding to two states, i.e., state 2 and state 3, may be additionally configured and applied for Cell X.
   C. As another example, in the case of the OLPC indicator field, when N_max = 4 and N_low configured for Cell X = 2, power control parameter set indices corresponding to two states, i.e., state 2 and state 3, may be additionally configured and applied for Cell X.
   D. As another example, in the case of the PUSCH LBT field, when N_max = 8 and N_low configured for Cell X = 4, LBT-related parameters/values (combinations) corresponding to four states from state 4 to state 7 may be additionally configured and applied for Cell X.
5) Alt 5: For Cell X, the UE may interpret and apply the state/index indicated by the DCI field as a state/index corresponding to a value obtained through a modulo-N_low operation on the state/index indicated by the DCI field. For example, referring to FIG. 10, a 'modulo-1 (DCI field value)' operation may be applied for Cell #1, a 'modulo-2 (DCI field value)' operation may be applied for Cell #2, and a 'modulo-3 (DCI field value)' operation may be applied for Cell #3.
   A. For example, when N_low = 5 and N_max = 8, states/indices {0,1,2,3,4,5,6,7} indicated by the DCI field may be interpreted and applied as states/indices {0,1,2,3,4,0,1,2}, respectively, for Cell X.
   B. For example, in the case of the BWP indicator field, when N_max = 4 and N_low configured for Cell X = 2, the UE may operate for Cell X by interpreting and applying states 0/1/2/3 indicated by the DCI field as states 0/1/0/1, respectively, and regarding BWP indices configured for corresponding states as being indicated.
   C. As another example, in the case of the OLPC indicator field, when N_max = 4 and N_low configured for Cell X = 2, the UE may operate for Cell X by interpreting and applying states 0/1/2/3 indicated by the DCI field as states 0/1/0/1, respectively, and regarding power control parameter set indices configured for corresponding states as being indicated.
   D. As another example, in the case of the PUSCH LBT field, when N_max = 8 and N_low configured for Cell X = 4, the UE may operate for Cell X by interpreting and applying states 0/1/2/3/4/5/6/7 indicated by the DCI field as states 0/1/2/3/0/1/2/3, respectively, and regarding LBT-related parameters/values (combinations) configured for corresponding states as being indicated.
6) Alt 6: When a state/index corresponding to a field value higher than {N_low - 1} is indicated through the DCI field, the most recently indicated state/index may be applied and maintained for Cell X.
   - For example, referring to FIG. 10 on the assumption that Alt 6 is applied alone (without application of Alt 1), when a value greater than binary value 00 is indicated through a DCI field of currently received first DCI, an indication by second DCI before the first DCI may be applied/maintained for Cell #1 (the second DCI being the last DCI indicating a valid value, that is, a field value equal to or less than {N_low - 1} for Cell #1). When a value greater than binary value 01 is indicated through the DCI field, Alt 6 may also be applied to Cell #2 (in addition to Cell #1).
   - Assuming that Alt 6 is applied in addition to Alt 1 as described above, according to Alt 1, in the case of Cell #1, only one bit (MSB or LSB) among a total of two bits included in the DCI field may be selected and applied. If a binary value of the selected one bit is 1, an indication by the second DCI before the currently received first DCI may be applied/maintained for Cell #1 because no value to be applied is present in the table of Cell #1 (the second DCI being the last DCI indicating a valid value, that is, a field value equal to or less than {N_low - 1} for Cell #1).
   - When Alt 6 is applied (regardless of whether Alt 1 is applied), if a value greater than binary value 10 is indicated through the DCI field, an indication by the second DCI before the currently received first DCI may be applied/maintained for Cell #3 (the second DCI being the last DCI indicating a valid value, that is, a field value equal to or less than {N_low - 1} for Cell #3).

   A. Accordingly, the UE may perform PDSCH/PUSCH transmission/reception operation on Cell X by applying/maintaining the most recently indicated state/index for Cell X.
   B. For example, in the case of the BWP indicator field (or the OLPC indicator field), when N_low configured for Cell X = 2 and a state indicated by the BWP indicator field (or the OLPC indicator field) (in the multi-cell DCI) has a value greater than 1 (i.e., bit 01), the UE may operate for Cell X such that the most recently indicated current active BWP index (or the most recently indicated power control parameter set index) is maintained/applied.
7) Alt 7: For Cell X, the UE may interpret and apply only the first L bits (MSBs) or only the last L bits (LSBs) among M bits in the DCI field.
   A. In this case, for Cell X, only the lowest (or highest) 2^{L} states/indices (and 2^{L} parameter/value combinations configured therefor) among N_low states/indices (configured for single-cell (scheduling) DCI of Cell X) may be indicated through the DCI field.
   B. For example, in the case of the BWP indicator field, when N_max = 4 and N_low configured for Cell X = 3, the UE may operate for Cell X by interpreting only an MSB 1-bit or an LSB 1-bit in the 2-bit BWP indicator field (in the multi-cell DCI) and regarding a BWP index configured for one of the lowest (or highest) two states (among three states corresponding to N_low) as being indicated.
   C. As another example, in the case of the OLPC indicator field, when N_max = 4 and N_low configured for Cell X = 3, the UE may operate for Cell X by interpreting only an MSB 1-bit or an LSB 1-bit in the 2-bit OLPC indicator field (in the multi-cell DCI) and regarding a power control parameter set index configured for one of the lowest (or highest) two states (among three states corresponding to N_low) as being indicated.
   D. As another example, in the case of the PUSCH LBT field, when N_max = 8 and N_low configured for Cell X = 6, the UE may operate for Cell X by interpreting only an MSB 2-bit or an LSB 2-bit in the 3-bit PUSCH LBT field (in the multi-cell DCI) and regarding an LBT-related parameter/value (combination) configured for one of the lowest (or highest) four states (among six states corresponding to N_low) as being indicated.

When the shared-cell-common method (based on Opt X) is applied to the BWP indicator field, one of states indicated by the BWP indicator field in the multi-cell DCI may be configured to represent "no BWP index switching" or "maintaining a current active BWP," and, when the corresponding state is indicated, the UE may operate to maintain the current active BWP without changing a BWP index for all cells scheduled through the DCI.

### [Method of configuring/setting (multi-cell) table for shared-state-extension method]

When the shared-state-extension method proposed in the disclosure is applied to a specific DCI field (for example, a TDRA field, an RM indicator, a ZP CSI-RS trigger, a TCI field, an SRS request, an SRS offset indicator, or the like), only one field (which is commonly applied to a plurality of co-scheduled cells) may be configured in the multi-cell DCI. Each row in a table referenced by the corresponding field may be configured/set as a combination of cell-specific (PDSCH/PUSCH transmission/reception-related) parameters/values (sets) for a plurality of cells (belonging to the entire schedulable cell set) (rather than a (PDSCH/PUSCH transmission/reception-related) parameter/value (set) for one cell). For example, in the case of the TDRA field, each row may be configured/set as a combination of {K0 or K2, SLIV, PDSCH or PUSCH mapping type A/B}; in the case of the RM indicator, each row may be configured/set as a combination of rate-matching patterns; in the case of the ZP CSI-RS trigger, each row may be configured/set as a combination of aperiodic ZP CSI-RS resource set indices; in the case of the TCI field, each row may be configured/set as a combination of TCI states; in the case of the SRS request, each row may be configured/set as a combination of aperiodic SRS resource set indices; and, in the case of the SRS offset indicator, each row may be configured/set as a combination of slot offsets. Accordingly, when a specific code-point (or state) is indicated through the field, a combination of parameters/values (sets) of a plurality of cells configured in a row (index) in the (multi-cell) table corresponding to the code-point/state may be applied to PDSCH/PUSCH transmission/reception operation on co-scheduled cells.

The multi-cell table may, for example, be configured in a structure as shown in FIG. 11, and may have a structure in which, for each row (index) in the table, a combination of parameters/values (sets) of a plurality of cells (belonging to the entire schedulable cell set) is configured (for example, in the case of row index 0 in the table of FIG. 11, parameters/values (sets) for Cell 1/2/3/4 are configured as A0/B0/C0/D0). A value configured for each cell in each row of the multi-cell table may be configured as a row index in a (single-cell) table configured for single-cell (scheduling) DCI for the corresponding cell (for example, in the case of the TDRA field, the TCI field, the ZP CSI-RS trigger, the SRS request, or the SRS offset indicator). Alternatively, the value configured for each cell in each row of the multi-cell table may be configured as a code-point (or state) of the specific field in single-cell DCI for the corresponding cell (for example, in the case of the TCI field, the RM indicator, the ZP CSI-RS trigger, the SRS request, or the SRS offset indicator). Accordingly, a parameter/value (set) configured for the corresponding row index in the single-cell table, or a parameter/value (set) configured for the code-point/state of the corresponding field in the single-cell DCI, may be configured in the row of the multi-cell table. For example, in row index 0 in the table of FIG. 11, A0/B0/C0/D0 corresponding to Cell 1/2/3/4 may mean that row indices A0/B0/C0/D0 in single-cell tables configured for Cell 1/2/3/4 are configured, or may mean that code-points/states A0/B0/C0/D0 of a field in single-cell DCI configured for Cell 1/2/3/4 are configured. A0/A1/A2 corresponding to Cell 1 in row indices 0/1/2 may mean that row indices A0/A1/A2 in a single-cell table configured for Cell 1 are configured, or may mean that code-points/states A0/A1/A2 of a field in single-cell DCI configured for Cell 1 are configured.

For example, in the case of the RM indicator field, the corresponding field in single-cell DCI may have a structure in which whether rateMatchPatternGroup1 and rateMatchPatternGroup2 are applied is indicated through a 2-bit bitmap, and code-points (or states) 0/1/2/3 corresponding thereto may be configured as values for respective cells in each row of the multi-cell table. As another example, in the case of the SRS request field, the corresponding field may have a structure in which (for a cell for which an SUL carrier is configured) one of a non-SUL carrier and an SUL carrier is indicated through an MSB 1-bit in a 3-bit field in single-cell DCI and an aperiodic SRS resource set index is indicated through the remaining 2 bits, or (for a cell for which an SUL carrier is not configured) an aperiodic SRS resource set index is indicated through a 2-bit field in single-cell DCI. Accordingly, code-points (or states) 0/1/2/3/4/5/6/7 corresponding thereto (for a cell for which an SUL carrier is configured), or code-points (or states) 0/1/2/3 corresponding thereto (for a cell for which an SUL carrier is not configured), may be configured as values for respective cells in each row of the multi-cell table. Alternatively, through the multi-cell DCI, only an SRS request for a non-SUL carrier may be allowed (even for a cell for which an SUL carrier is configured). In this case, code-points (or states) 0/1/2/3 corresponding to an indication of an aperiodic SRS resource set index through the remaining 2 bits excluding the MSB 1-bit may be configured as values for respective cells in each row of the multi-cell table. As another alternative, through the multi-cell DCI, only an SRS request for the most recently indicated/configured/activated carrier among a non-SUL carrier and an SUL carrier may be allowed (for a cell for which an SUL carrier is configured). In this case, code-points (or states) 0/1/2/3 corresponding to an indication of an aperiodic SRS resource set index through the remaining 2 bits excluding the MSB 1-bit may be configured as values for respective cells in each row of the multi-cell table.

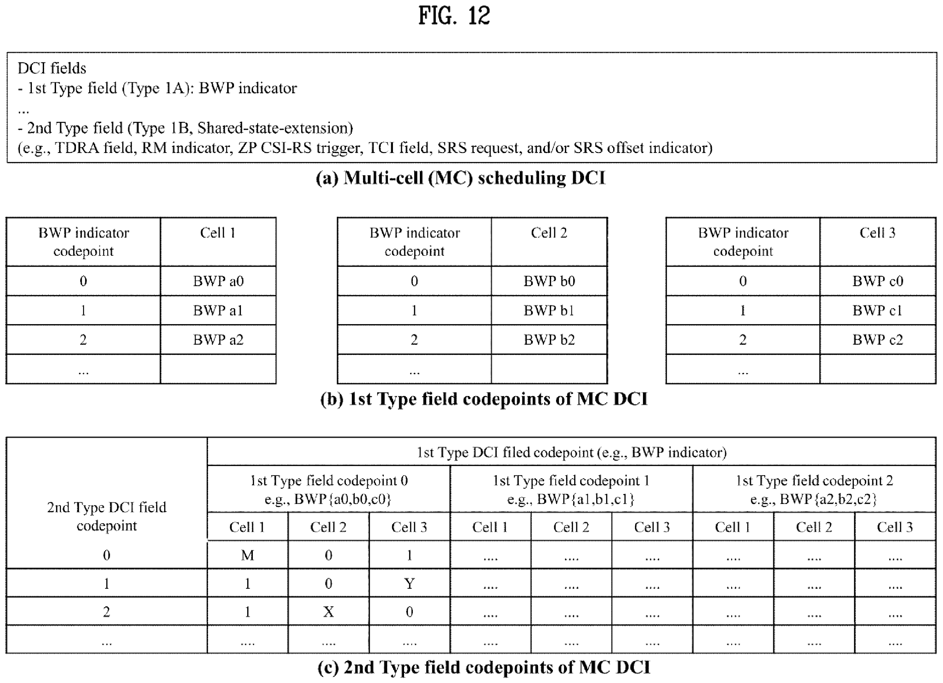

In consideration of an operation of indicating BWP indices for a plurality of cells through the BWP indicator field in the multi-cell DCI, the multi-cell table may be configured as follows.
1) Opt 1: In consideration of indication operation of the BWP indicator field based on Type 1A (Alt A/B and/or Alt 1/2/3/4/5/6/7), the multi-cell table may be configured, for each code-point (or state) of the corresponding BWP indicator field, based on a combination of cell-specific BWP indices (belonging to the entire schedulable cell set) corresponding to the code-point (or state) (or indicated by the code-point (or state)).
   A. For example, referring to FIG. 12, it is assumed that the entire schedulable cell set is composed of Cell 1/2/3, and that, for code-points (or states) 0/1/2 of the BWP indicator field, BWP indices a0/a1/a2 correspond to (or are indicated for) Cell 1, BWP indices b0/b1/b2 correspond to (or are indicated for) Cell 2, and BWP indices c0/c1/c2 correspond to (or are indicated for) Cell 3 (through indication operation of the BWP indicator field based on Type 1A (i.e., based on Alt A/B and/or Alt 1/2/3/4/5/6/7)). According to Opt 1, as shown in FIG. 12(c), code-points and corresponding values of a second type (shared-state-extension) field may be defined for a cell-specific BWP index combination {a0, b0, c0} corresponding to code-point (or state) 0 of the BWP indicator field, which is a first type field (e.g., Type 1A). Similarly, code-points and corresponding values of the second type (shared-state-extension) field may be defined for each of a cell-specific BWP index combination {a1, b1, c1} corresponding to code-point (or state) 1 of the BWP indicator field and a cell-specific BWP index combination {a2, b2, c2} corresponding to code-point (or state) 2 of the BWP indicator field. Accordingly, the multi-cell table (e.g., FIG. 12(c)) may be configured.
   B. When a cell configured through RRC to operate with only one specific BWP (index), without a BWP index indication through DCI, is included, for each of all code-points (or states) of the BWP indicator field, a combination of cell-specific BWP indices corresponding to the code-point (or state) may be determined by including the corresponding specific BWP (index) of the cell, and the multi-cell table may be configured based thereon.
      i. For example, when only one specific BWP index c0 is configured for Cell 3 in the above example, the multi-cell table may be configured for each of a cell-specific BWP index combination {a0, b0, c0} corresponding to code-point (or state) 0, a cell-specific BWP index combination {a1, b1, c0} corresponding to code-point (or state) 1, and a cell-specific BWP index combination {a2, b2, c0} corresponding to code-point (or state) 2.
   C. In addition, when a cell configured to operate by switching among a plurality of (e.g., N) BWPs (indices) based on a specific timer, without a BWP index indication through DCI, is included, for each of all code-points (or states) of the BWP indicator field, N combinations of cell-specific BWP indices corresponding to the code-point (or state) may be determined by including each of the N BWPs (indices) of the cell, and the multi-cell table may be configured based thereon.
      i. For example, when two BWP indices c0/c1 operating based on a specific timer (switching) are configured for Cell 3 in the above example, the multi-cell table may be configured for each of cell-specific BWP index combinations {a0, b0, c0} and {a0, b0, c1} corresponding to code-point (or state) 0, cell-specific BWP index combinations {a1, b1, c0} and {a1, b1, c1} corresponding to code-point (or state) 1, and cell-specific BWP index combinations {a2, b2, c0} and {a2, b2, c1} corresponding to code-point (or state) 2.
   D. When all cells belonging to the entire schedulable cell set are configured to operate with only one specific BWP (index) through RRC without a BWP index indication through DCI or to operate by switching among a plurality of BWPs (indices) based on a specific timer, the multi-cell table may be configured for each of all possible cell-specific BWP (index) combinations, or the multi-cell table may be configured and applied based on Opt 2 below.
      i. For example, when only one BWP index a0 is configured for Cell 1, only one BWP index b0 is configured for Cell 2, and only one BWP index c0 is configured for Cell 3, the multi-cell table may be configured only for one cell-specific BWP index combination {a0, b0, c0}. As another example, when only one BWP index a0 is configured for Cell 1, only one BWP index b0 is configured for Cell 2, and two BWP indices c0/c1 operating based on a specific timer (switching) are configured for Cell 3, the multi-cell table may be configured for each of two cell-specific BWP index combinations {a0, b0, c0} and {a0, b0, c1}. As another example, when two BWP indices a0/a1 operating based on a specific timer (switching) are configured for Cell 1, two BWP indices b0/b1 operating based on a specific timer (switching) are configured for Cell 2, and two BWP indices c0/c1 operating based on a specific timer (switching) are configured for Cell 3, the multi-cell table may be configured for each of eight cell-specific BWP index combinations {a0, b0, c0}, {a0, b0, c1}, {a0, b1, c0}, {a0, b1, c1}, {a1, b0, c0}, {a1, b0, c1}, {a1, b1, c0}, and {a1, b1, c1}.
2) Opt 2: For each cell (belonging to the entire schedulable cell set), when a set of values corresponding to the cell in each row of the multi-cell table (for example, a row index in a single-cell table or a code-point/state of a field in single-cell DCI) (over all rows) is configured for each BWP index of the cell (for convenience, the set is referred to as a "per-cell sub-table") (for example, {A0, A1, A2} in FIG. 11 may be a per-cell sub-table corresponding to Cell 1), the multi-cell table may be configured and applied by concatenating per-cell sub-tables of a plurality of cells according to a cell-specific (active) BWP index combination indicated through the multi-cell DCI.
   A. For example, when the entire schedulable cell set is composed of Cell 1/2, per-cell sub-tables corresponding to BWP indices a0/a1 of Cell 1 are configured as {A0_0, A1_0} and {A0_1, A1_1}, and per-cell sub-tables corresponding to BWP indices b0/b1 of Cell 2 are configured as {B0_0, B1_0} and {B0_1, B1_1}, if a cell-specific (active) BWP index combination indicated through the multi-cell DCI is {a0, b0}, the multi-cell table may be configured and applied by concatenating per-cell sub-tables {A0_0, A1_0} and {B0_0, B1_0}.
3) Opt 3: When only one multi-cell table is configured for all cells (belonging to the schedulable cell set), values configured in a per-cell sub-table for each cell in the multi-cell table (for example, a row index in a single-cell table or a code-point/state of a field in single-cell DCI) may be interpreted/applied as values configured for a BWP (index) of the corresponding cell (for example, a row index in a single-cell table or a code-point/state of a field in single-cell DCI) according to a cell-specific (active) BWP index combination indicated through the multi-cell DCI.

### (1) Handling of out-of-range problem when Opt 3 is applied

Specifically, Opt 3 may be described as follows. When only one multi-cell table (for example, a table having the same structure as that of the table of FIG. 11) is configured for all cells (belonging to the schedulable cell set) (and all BWPs configured for the cells), values configured in a per-cell sub-table (or column) for each cell in the multi-cell table (for example, a row index in a single-cell table or a code-point/state of a field in single-cell DCI) may be interpreted/applied as values configured for a BWP (index) indicated for the corresponding cell (for example, a row index in a single-cell table or a code-point/state of a field in single-cell DCI), according to a cell-specific (active) BWP index combination indicated through the BWP indicator field in the multi-cell DCI. For example, based on the table of FIG. 11, values {A0, A1, A2, ...} configured in a column related to Cell 1 in the table may be interpreted/applied as values configured for BWP index X (for example, a row index in a single-cell table or a code-point/state of a field in single-cell DCI) when BWP index X is indicated for Cell 1 through the BWP indicator field in the multi-cell DCI. The values {A0, A1, A2, ...} may be interpreted/applied as values configured for BWP index Y (for example, a row index in a single-cell table or a code-point/state of a field in single-cell DCI) when BWP index Y is indicated for Cell 1 through the BWP indicator field in the multi-cell DCI.

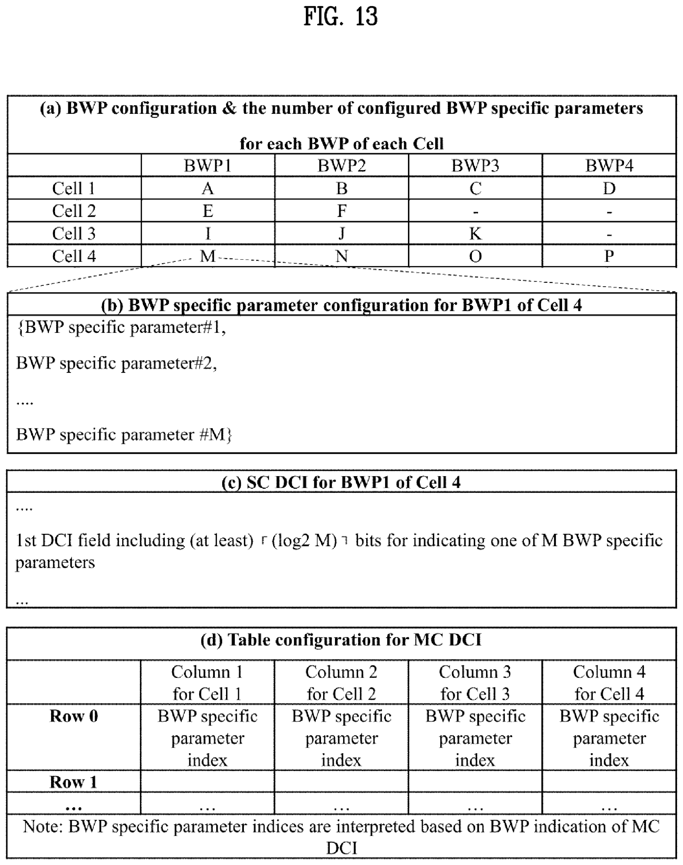

Values constituting a column (or per-cell sub-table) for each cell in the one multi-cell table may be configured using a maximum number of bits among numbers of bits used for configuring respective rows in single-cell tables (for respective BWPs of the corresponding cell), or using a maximum number of bits among numbers of bits corresponding to sizes of fields in single-cell DCI (for respective BWPs of the corresponding cell). FIG. 13 is a diagram for explaining a table configuration for multi-cell scheduling DCI according to an embodiment of the disclosure. In FIG. 13(d), the table configuration is for the shared-state-extension method and may be provided through higher-layer signaling (e.g., RRC). A specific DCI field included in MC DCI may indicate a specific row in the configured table (here, a row may also be referred to as an entry), and the specific DCI field may be a shared-state-extension DCI field for indicating a BWP-specific parameter other than TDRA (for example, an RM indicator, a ZP CSI-RS trigger, a TCI field, an SRS request, an SRS offset indicator, or the like). Referring to FIG. 13(a), four BWPs are configured for Cell 1, two BWPs are configured for Cell 2, three BWPs are configured for Cell 3, and four BWPs are configured for Cell 4. A BWP-specific parameter configuration may be provided for each BWP, and the number of configured BWP-specific parameters may be independent for each BWP. For example, A BWP-specific parameters may be configured for BWP1 of Cell 1, E BWP-specific parameters may be configured for BWP1 of Cell 2, I BWP-specific parameters may be configured for BWP1 of Cell 3, and M BWP-specific parameters may be configured for BWP1 of Cell 4. Under such a configuration, SC DCI may indicate a BWP-specific parameter through a specific DCI field (for convenience, referred to as a first DCI field). For example, referring to FIG. 13(c), the first DCI field of SC DCI for BWP1 of Cell 4 may indicate one of M BWP-specific parameters configured for BWP1 of Cell 4. In this case, a size of the first DCI field may be configured as (at least) $\left⌈\left({log}_{2}M\right)\right⌉$bits. Here, ┌ ┐ denotes a ceiling function. The table of FIG. 13(d) has four per-cell columns, where the term "column" may also be referred to by another term such as information, a field, or a sequence. In the table, the size of a per-cell column may be configured independently for each cell. For example, the size of a per-cell column of Cell 1 may be configured based on a BWP for which the largest number of bits is required to indicate a BWP-specific parameter. For example, the size of the per-cell column of Cell 1 may be configured based on $Max \left(\left⌈\left({log}_{2}A\right)\right⌉, \left⌈\left({log}_{2}B\right)\right⌉, \left⌈\left({log}_{2}C\right)\right⌉, \left⌈\left({log}_{2}D\right)\right⌉\right)$ (or, equivalently, $\left⌈\left({log}_{2}Max\left(A, B, C, D\right)\right)\right⌉$ ). The size of a per-cell column of Cell 2 may be configured based on $Max \left(\left⌈\left({log}_{2}E\right)\right⌉, \left⌈\left({log}_{2}F\right)\right⌉\right)$ (or, equivalently, $\left⌈\left({log}_{2} Max\left(E, F\right)\right)\right⌉$). MC DCI may include a BWP indication field and a BWP-specific parameter indication field, and a row of the table of FIG. 13(d) may be indicated through the BWP-specific parameter indication field. Through an indication of the row, a BWP-specific parameter index may be provided for each cell, and the indicated BWP-specific parameter index may be interpreted according to the indicated BWP. For example, when BWP 2 is indicated through the BWP indication field, the BWP-specific parameter index indicated for Cell 1 may be the index of one indicated BWP-specific parameter among B BWP-specific parameters configured for BWP2 of Cell 1 shown in FIG. 13(a).

In such a case, if a BWP (index) configured with a smaller number of bits (Y) than the maximum number of bits (X) (for a row in a single-cell table or a field in single-cell DCI) is indicated for the cell through the BWP indicator field in the multi-cell DCI, only Y bits corresponding to LSBs among X-bit values configured in a column of the cell (in the multi-cell table) may be interpreted/applied for the BWP (index) (as a row index in the single-cell table configured for the BWP (index) or as a code-point/state of a field in single-cell DCI configured for the BWP (index)). In the above case, if a value corresponding to the Y bits is a value that is not configured/is not valid in the single-cell table or single-cell DCI of the BWP (index), the UE may omit PUSCH/PDSCH transmission/reception on the cell by assuming that no scheduling is present for the cell. Alternatively, the UE may discard the DCI or apply one of Alt 1/2/3/4/5/6/7 by regarding the multi-cell DCI as an error.

### (2) Minimum applicable scheduling offset (min K0/K2) indicator field-related

A minimum value of a DCI (or PDCCH)-to-PDSCH offset (K0) indicated to the UE through DCI scheduling a PDSCH is referred to as min K0, and a minimum value of a DCI (or PDCCH)-to-PUSCH offset (K2) indicated to the UE through DCI scheduling a PUSCH is referred to as min K2. DCI may include a minimum applicable scheduling offset indicator field for indicating min K0/min K2. When min K0/min K2 is indicated through the minimum applicable scheduling offset indicator field in DCI, the UE may not expect that a K0/K2 value smaller than the indicated value of min K0/min K2 will be indicated through DL grant/UL grant DCI.

To support effective UE power saving operation through an indication of min K0/K2 in the multi-cell scheduling, the presence/absence of min K0/K2 may be identically configured for cells belonging to the entire schedulable cell set or cells belonging to each co-scheduled cell set (for example, it may be specified that the value of min K0/K2 is configured for all of the corresponding cells or is not configured for all of the corresponding cells, or the presence/absence and/or value of min K0/K2 may be configured on a schedulable cell set basis or a co-scheduled cell set basis (commonly for all cells belonging to the corresponding set)). In addition, it may be specified that the values of min K0/K2 configured for all or some of the cells belonging to the schedulable cell set or the co-scheduled cell set are identical. Further, for the same cell, the presence/absence and/or value of min K0/K2 may be individually/independently configured for an existing single-cell DCI format and a multi-cell DCI format.

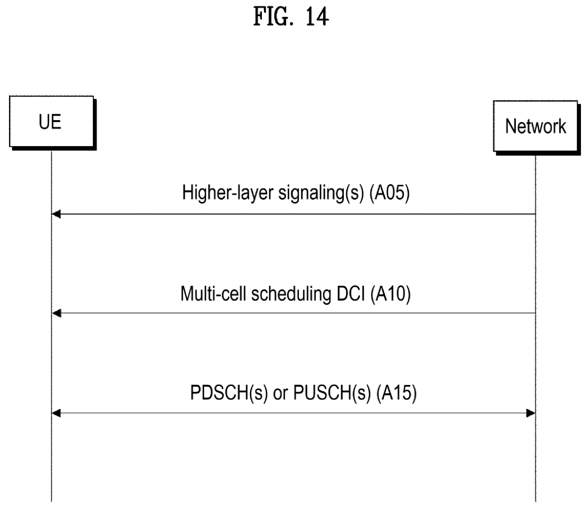

FIG. 14 is a diagram for explaining signal transmission/reception between a network and a UE according to an embodiment of the disclosure.

Referring to FIG. 14, the UE may receive higher-layer signaling from the network at least once (A05). The higher-layer signaling may include at least one of information for configuring a plurality of cells, BWP configuration information for each cell, BWP-specific parameter configuration information for each BWP, and configuration information for multi-cell scheduling. The configuration information for multi-cell scheduling may include a configuration of a table (e.g., FIG. 13(d)) related to a row (entry) indicated by a DCI field of DCI for multi-cell scheduling. In this case, each row may have a plurality of fields (e.g., a plurality of per-cell columns) for the plurality of cells. The size of each of the plurality of fields may be determined based on a BWP requiring the largest number of bits to indicate a BWP-specific parameter among BWPs configured for each cell. Among the plurality of fields, the size of a first field for a first cell may be determined based on a BWP requiring the largest number of bits to indicate the BWP-specific parameter among BWPs configured for the first cell. Among the plurality of fields, the size of a second field for a second cell may be determined based on a BWP requiring the largest number of bits to indicate the BWP-specific parameter among BWPs configured for the second cell. Based on L bits being required in a first BWP of the first cell, M bits being required in a second BWP of the first cell, and N bits being required in a third BWP of the first cell to indicate the BWP-specific parameter, the size of the first field for the first cell among the plurality of fields may be determined as the largest number of bits among L bits, M bits, and N bits.

The UE may receive DCI for multi-cell scheduling from the network (A10). The DCI for multi-cell scheduling may include a BWP indication field and a BWP-specific parameter indication field. The BWP-specific parameter indication field may indicate one of rows of the table, and information of each field included in the indicated row may be interpreted based on BWPs indicated through the BWP indication field. Based on Y bits being required to indicate the BWP-specific parameter for BWP #A indicated by BWP indication information for the first cell among the plurality of cells, and based on the size of the first field for the first cell among the plurality of fields being determined as X bits greater than the Y bits, a BS may provide a first BWP-specific parameter for BWP #A of the first cell by selecting the Y bits from among the X bits of the first field. The Y bits selected from among the X bits of the first field may be Y LSBs.

DCI may include minimum scheduling offset indication information. Whether a minimum scheduling offset is configured or the value of the minimum scheduling offset may be identical for co-scheduled cells. The minimum scheduling offset may be min K0 or min K2, where min K0 may be related to a DCI-to-PDSCH offset, and min K2 may be related to a DCI-to-PUSCH offset. The value of the minimum scheduling offset may be for the multi-cell scheduling, and the value of the minimum scheduling offset for the multi-cell scheduling may be separately configured (e.g., through higher-layer signaling) from minimum scheduling offset values for single-cell scheduling.

The DCI may schedule PDSCHs or PUSCHs on the co-scheduled cells.

The UE may receive PDSCHs or transmit PUSCHs on the co-scheduled cells based on the DCI (A15).

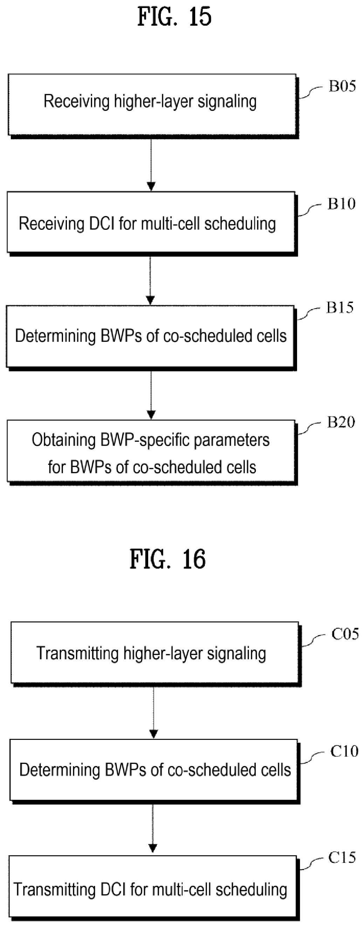

FIG. 15 illustrates a flow of a method performed by a UE according to an embodiment of the disclosure.

Referring to FIG. 15, the UE may receive, through higher-layer signaling, configuration information for a table configured such that each row has a plurality of fields for a plurality of cells (B05).=

The UE may receive DCI for multi-cell scheduling (B10).

The UE may determine BWPs of cells co-scheduled through the DCI based on BWP indication information of the DCI (B15).

The UE may obtain BWP-specific parameters for the BWPs of the co-scheduled cells based on the determined BWPs and the table (B20). The BWP-specific parameters configured in the plurality of fields included in each row of the table may be interpreted based on the determined BWPs. The size of each of the plurality of fields may be determined based on a BWP requiring the largest number of bits to indicate a BWP-specific parameter among BWPs configured for each cell.

Among the plurality of fields, the size of a first field for a first cell may be determined based on a BWP requiring the largest number of bits to indicate the BWP-specific parameter among BWPs configured for the first cell. Among the plurality of fields, the size of a second field for a second cell may be determined based on a BWP requiring the largest number of bits to indicate the BWP-specific parameter among BWPs configured for the second cell.

Based on L bits being required in a first BWP of the first cell, M bits being required in a second BWP of the first cell, and N bits being required in a third BWP of the first cell to indicate the BWP-specific parameter, the size of the first field for the first cell among the plurality of fields may be determined as the largest number of bits among the L bits, the M bits, and the N bits.

Based on Y bits being required to indicate the BWP-specific parameter for BWP #A determined based on the BWP indication information for the first cell among the plurality of cells, and based on the size of the first field for the first cell among the plurality of fields being determined as X bits greater than the Y bits, the UE may obtain a first BWP-specific parameter for BWP #A of the first cell by selecting the Y bits from among the X bits of the first field. The Y bits selected from among the X bits of the first field may be Y LSBs.

The DCI may include information for indicating one row in the table.

The DCI may schedule PDSCHs or PUSCHs on the co-scheduled cells. The DCI may include minimum scheduling offset indication information related to a minimum scheduling offset from the DCI to the PDSCHs or the PUSCHs. Whether a minimum scheduling offset is configured or the value of the minimum scheduling offset may be identical for the co-scheduled cells. The minimum scheduling offset may be min K0 or min K2.where min K0 may be related to a DCI-to-PDSCH offset, and min K2 may be related to a DCI-to-PUSCH offset. The value of the minimum scheduling offset may be for the multi-cell scheduling, and the value of the minimum scheduling offset for the multi-cell scheduling may be separately configured from minimum scheduling offset values for single-cell scheduling.

FIG. 16 illustrates a flow of a method performed by a BS according to an embodiment of the disclosure.

Referring to FIG. 16, the BS may transmit, through higher-layer signaling, configuration information for a table configured such that each row has a plurality of fields for a plurality of cells (C05). The size of each of the plurality of fields may be determined based on a BWP requiring the largest number of bits to indicate a BWP-specific parameter among BWPs configured for each cell. Among the plurality of fields, the size of a first field for a first cell may be determined based on a BWP requiring the largest number of bits to indicate the BWP-specific parameter among BWPs configured for the first cell. Among the plurality of fields, the size of a second field for a second cell may be determined based on a BWP requiring the largest number of bits to indicate the BWP-specific parameter among BWPs configured for the second cell. Based on L bits being required in a first BWP of the first cell, M bits being required in a second BWP of the first cell, and N bits being required in a third BWP of the first cell to indicate the BWP-specific parameter, the size of the first field for the first cell among the plurality of fields may be determined as the largest number of bits among the L bits, the M bits, and the N bits.

The BS may determine BWPs of cells to be co-scheduled through DCI for multi-cell scheduling (C10). The BS may indicate the BWPs of the cells co-scheduled through the DCI based on BWP indication information of the DCI.

The BS may transmit the DCI for multi-cell scheduling (C15).

BWP-specific parameters configured in the plurality of fields included in each row of the table may be interpreted based on the indicated BWPs.

Based on Y bits being required to indicate the BWP-specific parameter for BWP #A indicated by the BWP indication information for a first cell among the plurality of cells, and based on the size of the first field for the first cell among the plurality of fields being determined as X bits greater than the Y bits, the BS may provide a first BWP-specific parameter for BWP #A of the first cell by selecting the Y bits from among the X bits of the first field. The Y bits selected from among the X bits of the first field may be Y LSBs.

The DCI may include information for indicating one row in the table.

The DCI may schedule PDSCHs or PUSCHs on the co-scheduled cells. The DCI may include minimum scheduling offset indication information related to a minimum scheduling offset from the DCI to the PDSCHs or the PUSCHs. Whether a minimum scheduling offset is configured or the value of the minimum scheduling offset may be identical for the co-scheduled cells. The minimum scheduling offset may be min K0 or min K2, where min K0 may be related to a DCI-to-PDSCH offset, and min K2 may be related to a DCI-to-PUSCH offset. The value of the minimum scheduling offset may be for the multi-cell scheduling, and the value of the minimum scheduling offset for the multi-cell scheduling may be separately configured from minimum scheduling offset values for single-cell scheduling.

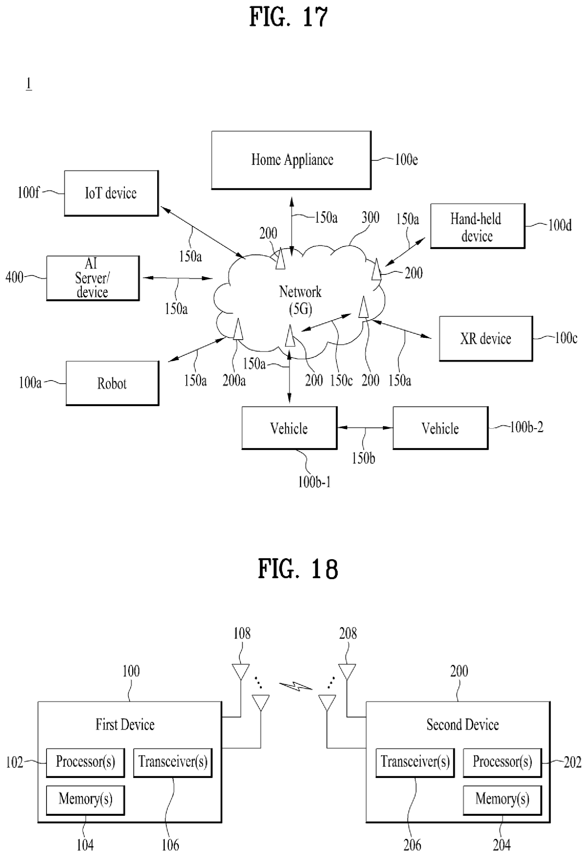

FIG. 17 illustrates a communication system 1 applied to the present disclosure.

Referring to FIG. 17, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 18 illustrates wireless devices applicable to the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

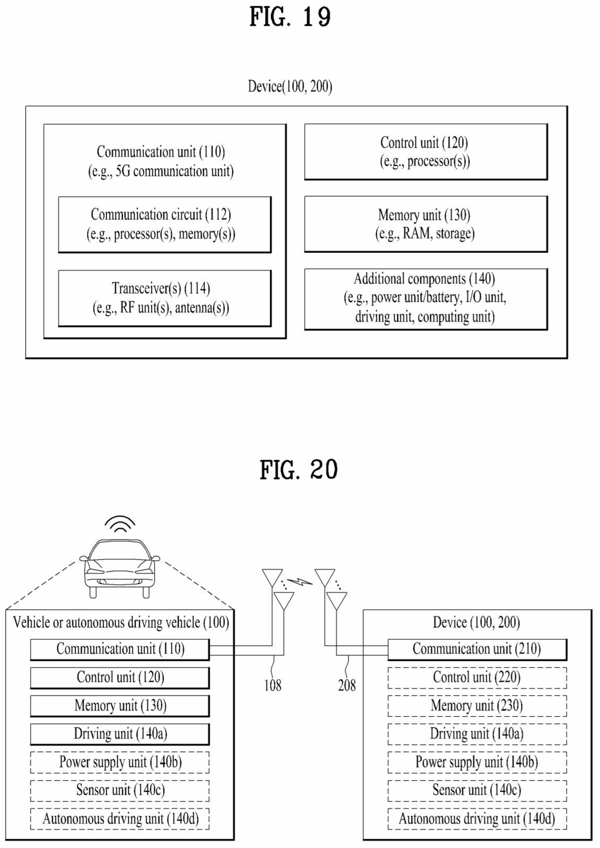

FIG. 19 illustrates another example of a wireless device applied to the present disclosure. The wireless device may be implemented in various forms according to a use-case/service (refer to FIG. 17).

Referring to FIG. 19, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast user equipment, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 20 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 20, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. The respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. In addition, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

The present disclosure is applicable to UEs, BSs, or other apparatuses in a wireless mobile communication system.

## Claims

1. A method performed by a user equipment (UE), the method comprising:
receiving, through higher-layer signaling, configuration information for a table configured such that each row has a plurality of fields for a plurality of cells;
receiving downlink control information (DCI) for multi-cell scheduling; and
determining bandwidth parts (BWPs) of cells co-scheduled through the DCI based on BWP indication information of the DCI,
wherein BWP-specific parameters configured in the plurality of fields included in each row of the table are interpreted based on the determined BWPs, and
wherein a size of each of the plurality of fields is determined based on a BWP requiring a largest number of bits to indicate a BWP-specific parameter among BWPs configured for each cell.

2. The method of claim 1, wherein a size of a first field for a first cell among the plurality of fields is determined based on a first BWP requiring a largest number of bits to indicate the BWP-specific parameter among BWPs configured for the first cell, and
wherein a size of a second field for a second cell among the plurality of fields is determined based on a second BWP requiring a largest number of bits to indicate the BWP-specific parameter among BWPs configured for the second cell.

3. The method of claim 1, wherein, based on L bits being required in a first BWP of a first cell, M bits being required in a second BWP of the first cell, and N bits being required in a third BWP of the first cell to indicate the BWP-specific parameter, a size of a first field for the first cell among the plurality of fields is determined as a largest number of bits among the L bits, the M bits, and the N bits.

4. The method of claim 1, wherein, based on Y bits being required to indicate the BWP-specific parameter for a first BWP determined based on the BWP indication information for a first cell among the plurality of cells, and based on a size of a first field for the first cell among the plurality of fields being determined as X bits greater than the Y bits, the UE obtains a first BWP-specific parameter for the first BWP of the first cell by selecting the Y bits from among the X bits of the first field.

5. The method of claim 4, wherein the Y bits selected from among the X bits of the first field are Y least significant bits (LSBs).

6. The method of claim 1, wherein the DCI includes information for indicating one row in the table.

7. The method of claim 1,
wherein the DCI schedules physical downlink shared channels (PDSCHs) or physical uplink shared channels (PUSCHs) on the co-scheduled cells,
wherein the DCI includes minimum scheduling offset indication information related to a minimum scheduling offset from the DCI to the PDSCHs or the PUSCHs, and
wherein whether the minimum scheduling offset is configured or a value of the minimum scheduling offset is identical for the co-scheduled cells.

8. The method of claim 7, wherein the minimum scheduling offset is min K0 or min K2,
wherein min K0 is related to a DCI-to-PDSCH offset, and
wherein min K2 is related to a DCI-to-PUSCH offset.

9. The method of claim 7, wherein the value of the minimum scheduling offset is for the multi-cell scheduling, and
wherein the value of the minimum scheduling offset for the multi-cell scheduling is configured separately from minimum scheduling offset values for single-cell scheduling.

10. A non-transitory computer-readable recording medium having recorded thereon instructions that, when executed by a processor of a user equipment (UE), cause the UE to perform the method of claim 1.

11. A device comprising:
a memory storing instructions; and
a processor configured to perform operations by executing the instructions,
wherein the operations of the processor comprise:
receiving, through higher-layer signaling, configuration information for a table configured such that each row has a plurality of fields for a plurality of cells;
receiving downlink control information (DCI) for multi-cell scheduling; and
determining bandwidth parts (BWPs) of cells co-scheduled through the DCI based on BWP indication information of the DCI,
wherein BWP-specific parameters configured in the plurality of fields included in each row of the table are interpreted based on the determined BWPs, and
wherein a size of each of the plurality of fields is determined based on a BWP requiring a largest number of bits to indicate a BWP-specific parameter among BWPs configured for each cell.

12. The device of claim 11, further comprising a transceiver,
wherein the device is a user equipment (UE) for wireless communication.

13. The device of claim 11, wherein the device is a processing device configured to control a user equipment (UE) for wireless communication.

14. A method performed by a base station (BS), the method comprising:
transmitting, through higher-layer signaling, configuration information for a table configured such that each row has a plurality of fields for a plurality of cells; and
transmitting downlink control information (DCI) for multi-cell scheduling,
wherein bandwidth parts (BWPs) of cells co-scheduled through the DCI are indicated based on BWP indication information of the DCI,
wherein BWP-specific parameters configured in the plurality of fields included in each row of the table are interpreted based on the indicated BWPs, and
wherein a size of each of the plurality of fields is determined based on a BWP requiring a largest number of bits to indicate a BWP-specific parameter among BWPs configured for each cell.

15. A base station (BS) comprising:
a memory storing instructions; and
a processor configured to perform operations by executing the instructions,
wherein the operations of the processor comprise:
transmitting, through higher-layer signaling, configuration information for a table configured such that each row has a plurality of fields for a plurality of cells; and
transmitting downlink control information (DCI) for multi-cell scheduling,
wherein bandwidth parts (BWPs) of cells co-scheduled through the DCI are indicated based on BWP indication information of the DCI,
wherein BWP-specific parameters configured in the plurality of fields included in each row of the table are interpreted based on the indicated BWPs, and
wherein a size of each of the plurality of fields is determined based on a BWP requiring a largest number of bits to indicate a BWP-specific parameter among BWPs configured for each cell.
